(19)

**Europäisches Patentamt**
**European Patent Office**
**Office européen des brevets**

(11) **EP 3 471 028 B1**

(12) **FASCICULE DE BREVET EUROPEEN**

(45) Date de publication et mention de la délivrance du brevet:
**28.02.2024 Bulletin 2024/09**

(21) Numéro de dépôt: **18200216.2**

(22) Date de dépôt: **12.10.2018**

(51) Classification Internationale des Brevets (IPC):
***G06N 10/00*** *(2022.01)*

(52) Classification Coopérative des Brevets (CPC):
**G06N 10/00**

(54) **OPTIMISATION D'UN CIRCUIT QUANTIQUE PAR INSERTION DE PORTES SWAP**

OPTIMIERUNG EINES QUANTENSCHALTKREISES DURCH EINFÜGEN VON SWAP GATES

OPTIMISATION OF A QUANTUM CIRCUIT BY INSERTION OF SWAP DOORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2017 FR 1759684**

(43) Date de publication de la demande:
**17.04.2019 Bulletin 2019/16**

(73) Titulaire: **Bull SAS**
**78340 Les Clayes-sous-Bois (FR)**

(72) Inventeurs:
• **MARTIEL, Simon**
**92120 Montrouge (FR)**
• **RUBAT CIAGNUS, Elise**
**76100 Rouen (FR)**

(74) Mandataire: **Plasseraud IP**
**66, rue de la Chaussée d'Antin**
**75440 Paris Cedex 09 (FR)**

(56) Documents cités:
• **YUICHI HIRATA ET AL: "AN EFFICIENT CONVERSION OF QUANTUM CIRCUITS TO A LINEAR NEAREST NEIGHBOR ARCHITECTURE", QUANTUM INFORMATION AND COMPUTATION, vol. 11, 1 janvier 2011 (2011-01-01), pages 142-166, XP055497722,**
• **YAMANAKA KATSUHISA ET AL: "Swapping labeled tokens on graphs", THEORETICAL COMPUTER SCIENCE, vol. 586, 1 janvier 2015 (2015-01-01), pages 81-94, XP029243926, ISSN: 0304-3975, DOI: 10.1016/J.TCS.2015.01.052**
• **ALFAILAKAWI MOHAMMAD GH ET AL: "Harmony-search algorithm for 2D nearest neighbor quantum circuits realization", EXPERT SYSTEMS WITH APPLICATIONS, OXFORD, GB, vol. 61, 14 mai 2016 (2016-05-14), pages 16-27, XP029619700, ISSN: 0957-4174, DOI: 10.1016/J.ESWA.2016.04.038**
• **ÉDOUARD BONNET ET AL: "Complexity of Token Swapping and Its Variants", ALGORITHMICA., vol. 80, no. 9, 27 septembre 2017 (2017-09-27), pages 2656-2682, XP055497482, US ISSN: 0178-4617, DOI: 10.1007/s00453-017-0387-0**
• **PEDRAM MASSOUD ET AL: "Layout Optimization for Quantum Circuits with Linear Nearest Neighbor Architectures", IEEE CIRCUITS AND SYSTEMS MAGAZINE, vol. 16, no. 2, 24 mai 2016 (2016-05-24), pages 62-74, XP011612122, ISSN: 1531-636X, DOI: 10.1109/MCAS.2016.2549950 [extrait le 2016-05-23]**

**EP 3 471 028 B1**

**Description**

DOMAINE DE L'INVENTION

La présente invention est relative au domaine des calculateurs quantiques. Plus précisément elle concerne l'optimisation d'un circuit quantique afin que l'ensemble des portes qui le composent soient locales.

CONTEXTE DE L'INVENTION

Un circuit quantique utilise les propriétés quantiques de la matière, telles que la superposition des états, et l'intrication, afin d'effectuer des opérations sur les données. À la différence d'un ordinateur conventionnel qui manipule des données binaires, ou « bits », un circuit quantique travaille sur des qubits, ou bits quantiques, qui représentent un état quantique basé sur deux états de base : |0> et |1>.

Des premiers algorithmes pour calculateur quantique sont apparus dans les années 1990. Un algorithme particulièrement emblématique et à l'origine d'un certain engouement pour les calculateurs quantiques et l'algorithme de Shor pour le calcul polynomial, décrit dans P. W. Shor, « Algorithm for quantum computation: discrete logarithms and factoring », in Foundations of Computer Science, pages 124-134, 1994.

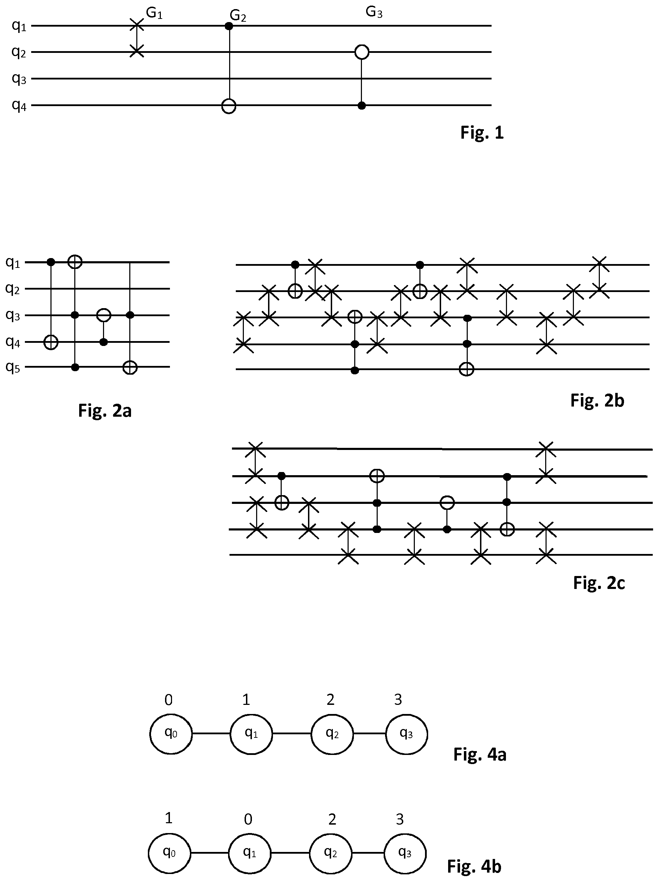

D'une façon générale, un circuit quantique peut être considéré comme une succession d'opérateurs, ou portes, quantiques, appliqués à un ensemble de qubit. La figure 1 illustre un circuit quantique simple, comportant 4 qubits q1, q2, q3, q4 agencés en ligne. De façon classique, on représente les qubits sous forme de lignes horizontales. La direction allant de la gauche vers la droite correspond au temps. Sur cette figure, 3 portes quantiques G1, G2, G3 composent le circuit et s'appliquent donc dans le temps selon une succession G1 puis G2 puis G3.

Une porte quantique peut impliquer un ou plusieurs qubits. Elles peuvent être de différentes natures et chacune représente un coût lié au temps de propagation du signal ou temps de passage de la porte. Parmi les portes classiquement utilisées, on peut citer la porte « swap » G1 qui intervertie deux valeurs de qubit.

L'agencement d'un circuit quantique implémentant un algorithme résulte souvent de procédé de génération plus au moins automatiques. Le circuit quantique est alors décrit de façon indépendante de l'infrastructure physique sur lequel il est amené à être déployé.

Notamment, ces circuits quantiques « théoriques » supposent que l'ensemble des qubits peuvent interagir les uns avec les autres. Ainsi, dans l'exemple de la figure 1, la porte quantique G2 fait interagir les qubits q1 et q4, alors que ceux-ci ne sont pas voisins, mais séparés par les qubits q2 et q3.

Or, les développements des infrastructures physiques pour calculateurs quantiques ont fait apparaître des contraintes physiques. Parmi ces contraintes, une contrainte dite « de localité » fait que la plupart des infrastructures ne permettent des interactions qu'entre qubits proches. Cette contrainte de localité est imposée par les mécanismes physiques utilisés pour mettre en oeuvre les qubits et les portes quantiques. Ainsi, une porte quantique telle que la porte G2 de la figure 1 ne peut donc pas être déployée directement sur ce type d'architecture.

Certains algorithmes classiques, tels que l'algorithme de Shor, peuvent faire l'objet d'optimisation permettant de les mettre en oeuvre sur des architectures soumises à la contrainte de localité. Mais en général, comme dit précédemment, les agencements des circuits quantiques sont synthétisés, automatiquement ou non, sans prendre en compte cette contrainte. Il apparaît donc un besoin de méthodes et d'outils pour optimiser un tel circuit, c'est-à-dire pour transformer un circuit indépendant de l'infrastructure physique en un circuit respectant la contrainte de localité et fonctionnellement équivalent.

Plusieurs méthodes ont été proposées qui, de façon générale, reposent sur l'insertion de portes « SWAP » locales. En insérant des portes Swap en amont d'une porte quantique donnée, on peut intervertir des qubits de sorte à rendre locale cette porte quantique.

Les figures 2a, 2b, 2c illustrent cette problématique. La figure 2a représente un circuit quantique non-optimisé pour un réseau de 4 qubits q1, q2, q3, q4 disposés en ligne. On remarque plusieurs portes quantiques non-locales, c'est-à-dire faisant interagir des qubits non-adjacents. Les portes quantiques sont représentées par des segments verticaux comportant des jonctions avec les lignes de qubits sur lesquels elles agissent. Le graphisme de ces jonctions (points, cercles...) correspond au type de porte quantique et au type d'action sur ces qubits.

Les figures 2b, 2c représentent deux optimisations possibles de ce circuit par insertions de portes quantiques Swap rendant chacune des portes locales. Les portes Swap sont représentés avec des croix comme bornes.

Toutefois, chaque insertion de porte quantique Swap représente un coût, lié notamment au temps de traversé de la porte. Il importe donc de déterminer, parmi les circuits équivalents optimisé, celui qui minimise ce coût supplémentaire.

Trouver une solution optimale à ce problème n'est pas envisageable car il y a un nombre exponentiel, en nombres de qubits et de portes, de circuits fonctionnellement équivalents et respectant la contrainte de localité.

Différentes solutions à ce problème ont été proposées. On peut par exemple citer la thèse de master « An efficient method to couvert arbitrary quantum circuits to ones on a Linear Nearest Neighbor architecture » de Yuichi Hirata, soutenue auprès de l'Institut de Sciences et de Technologies de Nara, Japon, et l'article YUICHI HIRATA ET AL: "AN EFFICIENT CONVERSION OF QUANTUM CIRCUITS TO A LINEAR NEAREST NEIGHBOR ARCHITECTURE",QUANTUM INFORMATION AND COMPUTATION, vol. 11, 1 janvier 2011 (2011-01-01), pages 142-166.

On peut également citer l'article « Depth-optimal Quantum Circuit Placement for Arbitrary Topologies » de Bhattacharjee Debyoti et Chattopadhyay Anupam, du Nanyang Technological University, 2017. On peut aussi citer l'article « Optimal SWAP Gate Insertion for Nearest Neighbor Quantum Circuits » de Robert Wille, Aaron Lye et Rolf Drechsler, in Design Automation Conférence (ASP-DAC), 2014 19th Asia and South Pacific

Mais ces solutions sont très lentes à trouver une solution puisqu'elles recherchent la solution globalement optimale. Dès que le nombre de qubits et de portes devient important, dans le cadre d'un algorithme complexe, la détermination du circuit quantique représentant un optimum global n'est plus possible, et ces solutions de l'état de la technique deviennent inutilisables en pratique.

D'autres familles de solutions visent à résoudre le problème dans un cadre plus encadré d'une infrastructure physique donnée, afin d'en limiter la combinatoire.

L'invention vise à proposer une solution qui puisse à la fois s'appliquer à des infrastructures physiques variées et atteindre des performances permettant son exploitation effective pour des grands nombres de qubits et de portes quantiques.

RESUME DE L'INVENTION

Le but de la présente invention est de fournir une solution palliant au moins partiellement les inconvénients précités.

A cette fin, la présente invention propose un procédé d'optimisation d'un circuit quantique composée d'une série ordonnée de portes quantiques appliqué à un agencement initial de valeurs de qubits, procédé défini par la revendication 1.

Suivant des modes de réalisation préférés, l'invention comprend une ou plusieurs des caractéristiques suivantes qui peuvent être utilisées séparément ou en combinaison partielle entre elles ou en combinaison totale entre elles :

- ledit coût prend en compte un coût attaché à chaque type de portes SWAP à insérer ;
- le rétablissement de l'agencement initial est effectuée selon un l'algorithme d'échanges de jetons ;
- ledit algorithme d'échanges de jetons est celui décrit au paragraphe 3.2 de l'article « Swapping Labeled Tokens on Graph » de K. Yamanaka, E. D. Demaine, T. Ito, J. Kawahara, M. Kiyomi, Y. Okamoto, T. Saitô, A. Suzuki, K. Uchizawa et T. Uno ;
- la taille de ladite suite est entre 3 et 5 ;
- lesdits plus courts chemins sont déterminés en précalculant les plus courts chemins entre l'ensemble des sommets dudit graphe ;
- lesdits plus courts chemins sont calculés par l'algorithme de Dijsktra.

Un autre objet de l'invention est relatif à un programme d'ordinateur comportant des instructions qui, lorsqu'exécutés par un processeur d'un système informatique, entraînent la mise en oeuvre d'un procédé tel que précédemment défini.

Un autre objet de l'invention est une plateforme d'optimisation d'un circuit quantique composée d'une série ordonnée de portes quantiques appliqué à un agencement initial de valeurs de qubits, plateforme définie par la revendication 8.

D'autres caractéristiques et avantages de l'invention apparaîtront à la lecture de la description qui suit d'un mode de réalisation préféré de l'invention, donnée à titre d'exemple et en référence aux dessins annexés.

BREVE DESCRIPTION DES DESSINS

La figure 1 représente schématiquement un exemple de circuit quantique simple selon l'état de la technique.
Les figure 2a, 2b, 2c représentent schématiquement un exemple de circuit quantique et deux optimisations possibles par insertions de portes Swap, selon l'état de la technique.
La figure 3 représente un organigramme schématique selon un mode de réalisation de l'invention.
Les figures 4a et 4b représentent schématiquement un exemple de graphe relatif à l'agencement des qubits, selon un mode de réalisation de l'invention.
Les figures 5a à 5d représentent également un graphe relatif à l'agencement des qubits, et différentes étapes *pour*

*passer d'un agencement à un autre.*
La figure 6 schématise une arborescence pour le choix d'une permutation, selon un mode de réalisation de l'invention.
Les figures 7a à 7d illustrent schématiquement des étapes d'interversions de qubits sur un exemple de graphe, pour passer d'un agencement à un autre.

## DESCRIPTION DETAILLEE DE L'INVENTION

L'invention vise donc à optimiser un circuit quantique constitué d'un ensemble de qubit et d'un ensemble de portes quantiques afin de rendre ces dernières locales. Bien évidemment, le circuit quantique résultant de cette optimisation doit être fonctionnellement équivalent, c'est-à-dire fournir une sortie identique pour une entrée donnée.

Un tel circuit quantique optimisé peut ensuite être implémenté sur une infrastructure physique quelconque, notamment une infrastructure imposant une contrainte de localité pour les portes quantiques.

On rappelle qu'on appelle « local » le fait de faire interagir des qubits adjacents dans l'arrangement topologique sous-jacent. Une porte est donc dite « locale » si les qubits qu'elle doit faire interagir en entrée sont adjacents. Cette notion est bien connue de l'homme du métier, désormais, et on peut trouver des définitions plus ou moins formalisées dans la littérature.

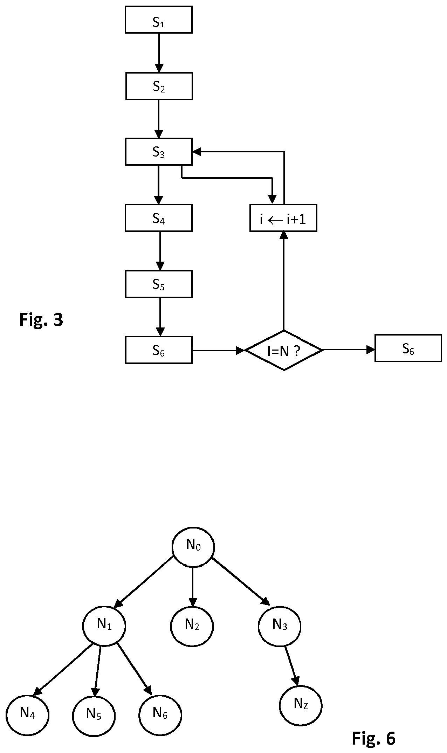

La figure 3 représente un organigramme décrivant une mise en oeuvre possible du procédé selon l'invention.

En entrée de cet algorithme, on dispose d'une structure de données décrivant un agencement de qubit. Cette structure peut être un simple vecteur dans le cas d'un agencement sous forme de lignes, mais elle peut être plus complexe pour d'autres types d'agencement.

La première étape S1 est une étape préliminaire consistant à déterminer un graphe représentatif de l'agencement des qubits du circuit quantique à optimiser. Les sommets du graphe représentent les positions des qubits et les arêtes représentent les relations de voisinage entre les positions des qubits.

On fait ici la distinction entre les positions des qubits et les valeurs des qubits. On appelle position l'emplacement au sein de l'infrastructure physique où se situe un qubit. A la suite d'une porte SWAP par exemple, les valeurs de deux positions de qubits sont échangées. Dans les figures 1, 2a, 2b, 2c, les positions de qubits représentent les lignes horizontales, tandis peuvent se déplacer entre les lignes et être modifiés du fait des portes quantiques.

Le graphe déterminé à l'issue de cette étape S1 est invariant dans sa topologie tout au long du procédé d'optimisation qui va être décrit. Toutefois, ces noeuds, qui correspondent à des positions de qubits, portent la valeur des qubits qui vont évoluer au fil des interversions.

La figure 4a représente un graphe d'un agencement simple, en ligne, de 4 positions q0, q1, q2, q3 ayant respectivement pour valeurs 0, 1, 2, 3, 4. Après application d'une porte Swap entre les positions q0 et q1, le graphe devient tel que représenté en figure 4b.

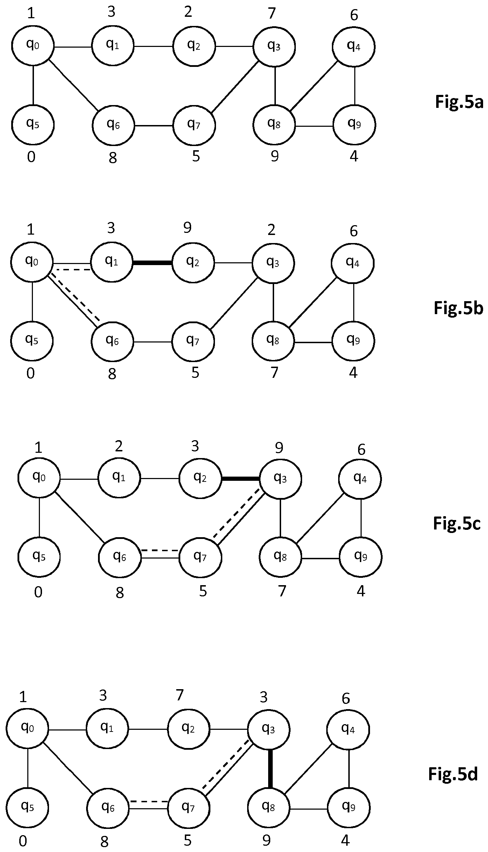

La figure 5a représente un graphe d'un agencement topologique plus complexe de 10 positions q0, q1, q2, q3, q4, q5, q6, q7, q8, q9. Les arrêtes figurent les adjacences et les étiquettes en regard de chaque position les valeurs respectives.

L'étape S2 est une autre étape de prétraitement consistant à calculer le plus court chemin entre chaque paire de sommets du graphe.

Ces plus courts chemins seront utilisés dans la suite du procédé. Dans la mesure où ce procédé est itératif, il est intéressant de pré-calculer ces plus courts chemins en amont de la boucle itérative S3-S6, plutôt que de les calculer à plusieurs itérations durant la boucle.

Le calcul du plus court chemin entre deux sommets peut être effectué selon plusieurs modes de réalisation. Un algorithme possible est l'algorithme de Dijsktra. Cet algorithme fait partie des algorithmes bien connus de l'homme du métier. Il est par exemple décrit dans tout manuel général d'algorithmique, et sur la page wikipedia :
https://fr.wikipedia.org/wiki/Algorithme_de_Dijkstra

Ce pré-calcul a une complexité quadratique en nombre de qubits, mais permet d'ensuite pouvoir estimer en temps constant le coût de « localisation » d'une porte quantique, c'est-à-dire le nombre et le coût des portes Swap à insérer pour rendre locale une porte. On peut ainsi obtenir les portes à insérer en un temps linéaire en nombre de qubits.

La boucle S3-S6 est itérée pour chacune des portes quantiques i du circuit, que l'on cherche à rendre locale.

Dans une étape S3, on vérifie que la porte quantique i est locale ou non. Si elle est déjà locale (ce qui est bien évidemment le cas pour les portes impliquant un unique qubit), alors on considère la porte quantique suivante, en itérant le compteur i.

Dans une étape S4, on créé un ensemble de permutations possibles permettant de rendre locale la porte quantique i. On appelle permutation une bijection de l'ensemble des qubits sur lui-même.

Chaque permutation peut être vue comme le résultat obtenu par une série d'interversions des valeurs de qubits de deux positions adjacentes (c'est-à-dire d'une série de portes Swap).

Selon l'invention, on ne recherche pas l'ensemble des permutations possibles, mais on utilise une heuristique permettant d'en déterminer un sous-ensemble. L'heuristique choisie permet de garantir que ce sous-ensemble est pertinent et permet de déterminer, *in fine,* une solution satisfaisante d'optimisation du circuit dans son entièreté.

Pour ce faire, il est proposé de considérer les plus courts chemins entre les qubits concernés par la porte quantique. Si la porte quantique est une porte impliquant deux qubits, on ne considère que ces deux-là ; si la porte quantique est une porte impliquant davantage de qubits, on considère une paire quelconque de qubits parmi ceux-ci.

Pour une paire de qubits concernés par ladite porte quantique, on créé l'ensemble des permutations possibles, obtenues, chacune, par une succession d'interversions de qubits situés sur le plus court chemin entre les qubits de la paire, et permettant de rendre locale la porte quantique i.

Dans l'exemple de la figure 5a, on considère une porte quantique i impliquant les positions de qubits q1, q6, q8. On choisit, de façon arbitraire (qui peut être aléatoire) la paire q1, q8.

On détermine ensuite le plus court chemin sur le graphe entre ces deux positions de qubit. Ce plus court chemin est [q1, q2, q3, q8]

On créé ensuite l'ensemble des successions d'interversions entre deux qubits adjacents situés sur ce chemin qui rendent adjacents les qubits situés initialement aux positions q1 et q8.

On détermine ainsi 3 permutations, pouvant chacune être obtenues par 2 interversions de qubits :

- [1, 3, 9, 2, 6, 0, 8, 5, 7, 4],
 résultant des interversions (q8, q3) et (q3, q2) ;
- [1,2,3,9,6,0,8,5,7,4],
 résultant des interversions (q8, q3) et (q1, q2) ;
- [1,2,7,3,6,0,8,5,9,4],
 résultant des interversions (q1, q2) et (q2, q3).

Les figures 5b, 5c et 5d schématisent des graphes d'agencement topologique correspondants, respectivement, à ces 3 permutations appliqués à l'exemple de la figure 5a comme état initial.

On voit que les valeurs 3 et 9, situées initialement sur les positions q1 et q8, respectivement, sont maintenant adjacentes, dans ces 3 permutations.

Si la porte quantique i ne concernait que ces 2 qubits, le travail s'arrêterait là : les valeurs 3 et 9 étant adjacentes, elles peuvent interagir de façon locale.

Comme la porte quantique i de l'exemple concerne un troisième qubit de valeur 8 en position q6, le processus se poursuit en considérant le plus court chemin entre cette position q6 et la paire de positions où se situent les valeurs 3 et 9, c'est-à-dire q1, q2 en figure 5b, q2, q3 en figure 5c et q3, q8 en figure 5c. La paire de positions où se situent les valeurs de qubit 3 et 9 sont indiquées avec un trait plus épais. Les plus courts chemins sont représentés par un trait pointillé.

De la même façon que précédemment, on créé ensuite, pour chacune des permutations obtenues précédemment, l'ensemble des séries d'interversions entre deux qubits adjacents situés sur ce chemin qui rendent adjacents les qubits situés initialement aux positions q6 et q1 ou q2, ou bien q2 ou q3, ou bien q3 ou q8, respectivement. Ces séries supplémentaires peuvent être ajoutées aux successions d'interversions précédemment obtenues.

Dans cet exemple, le plus court chemin vers le troisième qubit est de longueur 2 : une seule interversion est donc nécessaire sur ce plus court chemin. Par conséquent, le nombre de successions d'interversions possibles permettant d'obtenir les 3 permutations reste de 3 :

- [8, 3, 9, 2, 6, 0, 1, 5, 7, 4],
 résultant des inversions (q8, q3), (q3, q2) et (q6, q0);
- [1,2,3,9,6,0,5,8,7,4],
 résultant des inversions (q8, q3), (q1, q2) et (q6, q7);
- [1,2,7,3,6,0,5,8,9,4],
 résultant des inversions (q1, q2), (q2, q3) et (q6, q7).

Chaque interversion ainsi appliquée correspond à l'insertion d'une porte quantique de type Swap.

Il est à noter que cette façon de faire n'est pas optimale, dans le cas d'une porte quantique à 3 qubits. Toutefois, dans la pratique, la plupart des portes sont à un ou deux qubits, de sorte que la contribution non-optimale d'une porte à 3 qubits a peu d'impacts sur l'optimisation d'un circuit quantique dans son entièreté.

Pour chaque permutation, on peut calculer un coût associé. Ce coût correspond au nombre de portes quantiques Swap inséré (donc au nombre d'interversions), éventuellement pondéré par un coût par arrête du graphe. Il peut en effet être plus ou moins coûteux d'intervertir des qubits sur certaines positions, du fait de l'infrastructure physique sous-jacente.

Ce coût C peut alors s'exprimer :

$$C = \sum_{l} p_{l,j} \cdot S_{,jl} \, ,$$

dans lequel $S_{l,j}$ représente un nombre de portes Swap insérés entre les positions i et j, et $p_{i,j}$ le poids ed l'arrête i, j du graphe, c'est-à-dire un coûte associé à une interversion des qubits entre les positions i et j.

Dans une étape S5, on effectue un choix parmi les permutations déterminées à l'étape précédente S3, en fonction d'un coût. Ce coût peut être le coût C calculé ci-dessus que l'on cherche à minimiser

Préférentiellement, toutefois, le coût utilisé pour le choix est un coût cumulant les coûts déterminés pour les différentes interversions pour un certain nombre w de portes quantiques suivantes dans la série ordonnée constituant le circuit quantique.

Autrement dit, il s'agit dans cette étape S5 de choisir la permutation minimisant ce coût représentant le nombre d'interversions nécessaires (et éventuellement leurs poids $p_{i,j}$) pour rendre locales les portes quantiques d'une suite de longueur w au sein de la série de portes constituant le circuit quantique.

La figure 6 schématise une telle arborescence. Le noeud $N_0$ représente la position initiale de la figure 5a. Les noeuds $N_1$, $N_2$, $N_3$ représentent les 3 permutations correspondant respectivement aux figures 5b, 5c, 5d et à la porte i. Afin de choisir entre ces 3 permutations, des permutations $N_4$, $N_5$, $N_6$....$N_Z$ sont déterminées pour les portes i+1 et i+2 (avec w=2), et les coûts associés à chaque permutation sont calculés. Ces coûts sont cumulés sur chaque chemin allant d'une des permutations $N_1$, $N_2$ $N_3$ à une feuille. In fine, le noeud associé au coût le plus faible peut être choisi.

Il est à noter qu'il s'agit là d'une heuristique basée sur une optimisation locale, dont le nombre de portes w est un paramètre.

Il définit une profondeur d'une arborescence de calcul, et sa détermination fixe un compromis entre une recherche globale sur l'ensemble du circuit qui aboutirait à une explosion combinatoire, et une recherche très locale (w=1, w=2..) qui aboutirait à une solution finale satisfaisante mais non optimale.

Le choix du paramètre w peut être fait de façon expérimentale, par exemple en effectuant une batterie de tests sur un ensemble varié de circuits quantiques. Cet ensemble de circuits peut notamment être obtenu de façon aléatoire.

Expérimentalement, il est apparu que w=4 formait un bon compromis entre la qualité de l'approximation et le temps de calcul.

Dans une étape S6, une fois ce choix effectué, on peut mettre à jour des structures de données, stockées dans une mémoire, qui fourniront la solution en fin de la dernière itération de la boucle S3-S5.

Notamment, on peut mettre à jour

- Le nombre de portes Swap à insérer : nbtotal(i) = nbtotal(i-1)+nb(i). Il s'agit simplement d'ajouter le nombre d'interversions de qubits dans la permutation choisie pour la porte quantique i courante, à un nombre total calculé pour la porte précédente i-1.
- La liste des portes Swap à insérer : listetotale(i)=listetotale (i-1)+liste(i). Il s'agit d'ajouter de façon ensembliste les interversions qui viennent d'être déterminer pour la porte i courante à l'ensemble des interversions déjà déterminées jusqu'à la porte précédente i-1.
- Enfin, la structure de données représentant l'agencement du circuit est mise à jour en prenant pour nouvelle valeur celle de la permutation choisie.

Si par exemple la permutation correspondant au noeud $N_2$ est choisie, ces structures de valeurs auront pour valeur, à l'issue de l'itération correspondant à cette porte i :

$$Nb(i) = 3$$

$$Liste(i) = \{(q8, q3), (q1, q2) \text{ et } (q6, q7)\}$$

$$\text{Et comme agencement : } [1, 2, 3, 9, 6, 0, 5, 8, 7, 4],$$

Le procédé peut alors reboucler vers l'étape S3, dans une itération suivante consistant à considérer la porte quantique i+1. Les portes quantiques de la série ordonnée formant le circuit quantique sont ainsi traitées de façon successive.

Lorsque la dernière porte quantique du circuit est atteinte (i=N), le procédé se poursuit avec une étape S7 consistant à rétablir l'agencement initial des qubits.

Cette étape S7 vise donc à déterminer un ensemble d'insertions de portes quantiques de type Swap permettant à partir de la permutation obtenue pour la dernière itération de la boucle S3-S5 (soit, pour i=N) de revenir à l'agencement initial. On cherche en outre à minimiser le coût associé à ces insertions.

Ce problème technique peut être résolu de différentes façons peut être ramené à un problème général d'échange de jetons (« *token swapping* ») qui a été décrit dans l'article « Swapping Labeled Tokens on Graph » de K. Yamanaka, E. D. Demaine, T. Ito, J. Kawahara, M. Kiyomi, Y. Okamoto, T. Saitô, A. Suzuki, K. Uchizawa et T. Uno, in Fun with Algorithme (2014): 364-375.

Il a été démontré qu'il existe au moins une solution quelque soient les états d'arrivée et de départ, qui consiste en une succession d'échanges de jetons (ou d'interversions de qubits adjacents, dans le cas équivalent qui nous intéresse).

En revanche, ce problème d'échange de jetons étant NP-complet, il s'avère en pratique impossible de déterminer la solution optimale, c'est-à-dire qui donne un nombre minimal d'échanges. L'article mentionné ci-dessus propose donc une méthode heuristique pour déterminer une solution approchée.

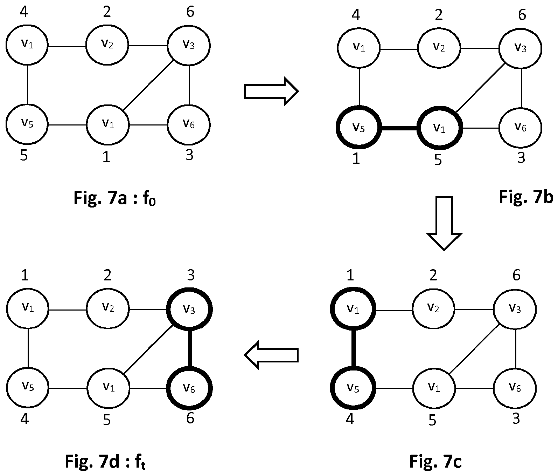

Les figures 7a, 7b, 7c, 7d sont tirées de l'article mentionné ci-dessus et illustre une série d'échanges de jetons (ou interversions de qubits) entre un agencement $f_0$ et un agencement $f_t$ au sein d'un graphe comprenant 6 noeuds (ou positions de qubits), $v_0$, $v_1$, $v_2$, $v_3$, $v_4$, $v_5$, $v_6$, sur lesquels sont placés 6 jetons (ou qubits).

La figure 7a représente un agencement initial $f_0$ pouvant correspondre à la dernière permutation de qubits obtenue en étape S5 pour la dernière porte quantique i=N. La figure 7d représente un agencement final $f_t$ qui correspond à l'agencement initial des qubits, tel que par exemple disponible aux étapes S1, S2.

Les figures 7b, 7c représentent deux étapes intermédiaires dans le plus court chemin parmi les successions d'échanges de jeton menant de $f_0$ à $f_t$ : un premier échange entre les jetons 5 et 1 (initialement en positions $v_4$ et $v_5$ respectivement) donne l'agencement illustré en figure 7b ; un second échange entre les jetons 4 et 1 (respectivement en positions $v_1$ et $v_4$ donne l'agencement illustré en figure 7c ; puis le dernier échange entre les jetons 16 et 3 (respectivement en positions $v_3$ et $v_6$) donne l'agencement final $f_t$.

L'article « Swapping Labeled Tokens on Graph » mentionné ci-dessus décrit plusieurs méthodes de résolution d'un tel problème technique dans le cas d'échanges de jetons.

Dans le cadre d'interversions de qubits, on créé dans un premier temps un arbre couvrant (ou « recouvrant ») du graphe représentatif de l'agencement des qubits.

On appelle arbre couvrant un arbre inclus dans ce graphe et qui connecte tous les sommets du graphe.

Parmi les différents arbres couvrant, on choisit celui dont la somme des poids sur les arrêtes est minimale. Si les interversions de qubit, c'est-à-dire les portes quantiques Swap, ont toutes le même poids (ou coût), alors ce problème revient à un simple parcours en profondeur dans le graphe.

Dans le cas contraire, on peut utiliser les algorithmes existants de détermination d'arbres couvrants. Parmi ces algorithmes, on peut notamment citer l'algorithme de Kruskal. Une présentation de cet algorithme peut être trouvée sur le site web de l'encyclopédie participative Wikipedia : https://fr.wikipedia.org/wiki/Algorithme_de_Kruskal et https://en.wikipedia.org/wiki/Kruskal%27s_algorithm en langue anglaise.

L'algorithme a été présenté pour la première fois dans l'article de Kruskal, J. B., "On the shortest spanning subtree of a graph and the traveling salesman problem" in Proceedings of the American Mathematical Society. 7: 48-50. JSTOR 2033241 (1956).

A partir de cet arbre couvrant, on peut utiliser l'algorithme décrit au paragraphe 3.2 de l'article susmentionné.

On appelle graphe de conflits D d'un arrangement f, un graphe $D=(V_D, E_D)$ répondant aux caractéristiques (1) et (2) :

(1)

$$V_D = \left\{ v_i \in V(G); f(v_i) \neq f_t(v_i) \right\}$$

(2) Il existe un arc $(v_i, v_j)$ dans le graphe D, si et seulement si

$$f(v_i)=f_t(v_j)$$

avec :

- $V_D$ l'ensemble des noeuds, c'est-à-dire des positions des qubits, pour le graphe de conflit D, et V celui pour le graphe G représentatif de l'agencement des qubits.
- $E_D$ et E, les ensembles des arrêtes pour, respectivement le graphe des conflits D et le graphe G.

- f(v$_i$) est la valeur du qubit en position v; dans l'arrangement f.

Ainsi, sur les figures 7a et 7d, on remarque notamment que f(v$_1$)=4 et f$_t$(v$_4$)=4, que f(vs)= et f$_t$(v$_1$)=1 ; et que f(v$_4$)=5 et ft(vs)=5. On obtient dans un sous-graphe du graphe de conflit D liant v$_1$, v$_4$ et v$_5$.

Autrement dit, chaque valeur de qubit f(v$_i$) située à la position v; à l'agencement f, dans le graphe de conflits D doit être déplacé jusqu'à la position v$_j$ dans ce même graphe de conflit, de sorte que (v$_i$, v$_j$)∈E$_D$.

On considère ensuite l'arbre couvrant T précédemment déterminé.

Pour deux noeuds u et v de cet arbre T, on note P(u, v) un chemin unique de l'arbre entre ces noeuds u et v.

On considère le graphe de conflits D pour un agencement initial f$_0$ que qubits de l'arbre T. On considère également C=(w$_1$, w$_2$, w$_3$...w$_q$) un cycle orienté arbitraire du graphe de conflit D avec w$_q$=w$_1$.

Si on pose ℓ$_k$=f$_0$(w$_k$) pour tout k tel que 1 ≤ k ≤ q -1, alors f$_t$(w$_{k+1}$)= ℓ$_k$.

L'algorithme itératif proposé vise alors à déplacer les qubits ℓ$_1$, ℓ$_2$, ℓ$_3$..ℓ$_{q-1}$ du cycle C vers leurs positions cibles le long des chemins uniques. Plus précisément, on construit une sous-séquence d'interversions S$_C$ comme suit :

- on initialise f$_{1,0}$=f$_0$

- à l'étape k, avec 1 ≤ k ≤ q - 2, on considère la valeur de qubit ℓ$_k$=f$_0$(w$_k$) dont la position courante est $f_{k,0}^{-1}(\ell_k)$ , et on la déplace sur la position sur le chemin $P(f_{k,0}^{-1}(\ell_k), f_{k,0}^{-1}(\ell_{k+1}))$ qui est adjacent à la position $f_{k,0}^{-1}(\ell_{k+1})$. On note f$_{k+1, 0}$ l'agencement de l'arbre T qui résulte de ce mouvement.

- A l'étape (q-1), on déplace la valeur de qubit ℓ$_{q-1}$=f$_0$(w$_{q-1}$) depuis sa position courante $f_{q-1,0}^{-1}(\ell_{q-1})$ vers la position w$_q$ (=w$_1$).

A l'issue du déroulement de l'algorithme, cette séquence S$_C$ possède deux caractéristiques :

(a)

$$Len(S_C) \le \sum_{1\le k \le q-1} sp_T(w_k, w_{k+1}),$$

où *Len(S$_C$)* est la longueur de la séquence Sc et sp$_T$(w$_k$, w$_{k+1}$) est le nombre d'arrête sur l'arbre T entre les positions w$_k$ et w$_{k+1}$ ;

(b) L'agencement f de l'arbre T obtenu par la séquence S$_C$ satisfait, pour chaque position v; de V(T) :

$$f(v_i) = \begin{cases} f_t(v_i) & si\ v_i \in C \\ f_0(v_i) & sinon \end{cases}$$

Ces caractéristiques nous permettent de pouvoir choisir les cycles orientés du graphe de conflits D dans un ordre arbitraire. Et ainsi, en construisant des séquences d'interversion pour tous les cycles orientés de D, de façon itérative, on aboutit finalement à l'agencement f$_t$ de l'arbre T.

Autrement dit, on arrive à reconstituer, de façon itérative et en un temps polynomial, l'agencement initial des qubits.

**Revendications**

1. Procédé d'optimisation d'un circuit quantique composé d'une série ordonnée de portes quantiques appliqué à un agencement initial de valeurs de qubits, consistant à insérer un ensemble de portes SWAP locales, afin que l'ensemble des portes dudit circuit quantique soient locales, comprenant des étapes, exécutées par un processeur d'un système informatique, consistant à :

- pour chaque porte quantique de ladite série, si celle-ci n'est pas locale, insérer un ensemble de porte SWAP locales avant ladite porte quantique,
- déterminer (S4) l'ensemble de permutations, chacune constituée d'une succession d'interversions de valeurs de qubits le long des plus courts chemins entre les positions de qubits associés à ladite porte quantique, et
- choisir (S5) parmi ledit ensemble de permutations, une permutation minimisant un coût représentant le nombre d'interversions nécessaires pour rendre locales les portes quantiques d'une suite au sein de ladite série, la taille de ladite suite étant substantiellement inférieure à celle de ladite série;
- rétablir (S7) ledit agencement initial en établissant un arbre couvrant d'un graphe représentatif de l'agencement des qubits dudit circuit, et en effectuant des interversions de valeurs de qubits le long de chemins dudit arbre,

dans lequel la détermination (S4) de l'ensemble des permutations est effectuée en

- déterminant une succession d'interversions de valeurs de qubits le long des premiers plus courts chemins entre une paire quelconque de positions de qubits associés à ladite porte quantique, puis,
- et si ladite porte quantique possède plus de deux positions de qubits associés, en déterminant une succession d'interversions de valeurs de qubits le long des deuxièmes plus courts chemins entre chacune des positions en dehors de celles déjà considérées, et les premiers plus courts chemins déjà déterminés.

**2.** Procédé selon la revendication 1, dans lequel ledit coût prend en compte un coût attaché à chaque type de portes SWAP à insérer.

**3.** Procédé selon l'une des revendications précédentes, dans lequel le rétablissement de l'agencement initial est effectuée selon un l'algorithme d'échanges de jetons.

**4.** Procédé selon l'une des revendications précédentes, dans lequel la taille de ladite suite est entre 3 et 5.

**5.** Procédé selon l'une des revendications précédentes dans lequel lesdits plus courts chemins sont déterminés en précalculant les plus courts chemins entre l'ensemble des sommets dudit graphe.

**6.** Procédé selon la revendication précédente, dans lequel lesdits plus courts chemins sont calculés par l'algorithme de Dijsktra.

**7.** Programme d'ordinateur comportant des instructions qui, lorsqu'exécutés par un processeur d'un système informatique, entraînent la mise en oeuvre d'un procédé selon l'une des revendications précédentes.

**8.** Plateforme d'optimisation d'un circuit quantique composée d'une série ordonnée de portes quantiques appliqué à un agencement initial de valeurs de qubits, consistant à insérer un ensemble de portes SWAP locales, afin que l'ensemble des portes dudit circuit quantique soient locales, comprenant des moyens de traitement numérique pour

- pour chaque porte quantique de ladite série, si celle-ci n'est pas locale, insérer un ensemble de porte SWAP locales avant ladite porte quantique,
- en déterminant l'ensemble de permutations, chacune constituée d'une succession d'interversions de valeurs de qubits le long des plus courts chemins entre les positions de qubits associés à ladite porte quantique, et
- en choisissant parmi ledit ensemble de permutations, une permutation minimisant un coût représentant le nombre d'interversions nécessaires pour rendre locales les portes quantiques d'une suite au sein de ladite série, la taille de ladite suite étant substantiellement inférieure à celle de ladite série;
- rétablir ledit agencement initial en établissant un arbre couvrant d'un graphe représentatif de l'agencement des qubits dudit circuit, et en effectuant des interversions de valeurs de qubits le long de chemins dudit arbre,

dans lequel l'ensemble des permutations est déterminée en

- déterminant une succession d'interversions de valeurs de qubits le long des premiers plus courts chemins entre une paire quelconque de positions de qubits associés à ladite porte quantique, puis,
- et si ladite porte quantique possède plus de deux positions de qubits associés, en déterminant une succession d'interversions de valeurs de qubits le long des deuxièmes plus courts chemins entre chacune des positions en dehors de celles déjà considérées, et les premiers plus courts chemins déjà déterminés.

**Patentansprüche**

**1.** Verfahren für ein Optimieren einer Quantenschaltung, welche aus einer geordneten Reihe von Quantengattern aufgebaut ist, welche auf eine anfängliche Anordnung von Qubit-Werten angewendet wird, bestehend aus einem Einfügen eines Satzes lokaler SWAP-Gatter, so dass der Satz von Gattern der Quantenschaltung lokal wird, umfassend Schritte, welche von einem Prozessor eines Computersystems ausgeführt werden, bestehend aus:

- für jedes Quantengatter der Reihe, falls es nicht lokal ist, Einfügen eines Satzes von lokalen SWAP-Gattern vor dem Quantengatter,
- Bestimmen (S4) des Satzes von Permutationen, von welchen jede eine Abfolge von Umstellungen von Qubit-Werten entlang kürzesten Wegen zwischen den Positionen von Qubits bildet, welche dem Quantengatter zugeordnet sind, und
- Auswählen (S5) aus dem Satz von Permutationen, einer Permutation, welche einen Kostenpunkt minimiert, welcher die Zahl der notwendigen Umstellungen repräsentiert, um die Quantengatter einer Sequenz innerhalb der Reihe lokal zu machen, wobei die Größe der Sequenz wesentlich kleiner als diejenige der Reihe ist;
- Wiederherstellen (S7) der anfänglichen Anordnung, indem ein abdeckender Baum eines Graphen erzeugt wird, welcher die Anordnung der Qubits der Schaltung repräsentiert, und indem die Umstellungen von Qubit-Werten entlang der Wege des Baums ausgelöst werden,

wobei das Bestimmen (S4) des Satzes von Permutationen bewirkt wird durch:

- Bestimmen einer Abfolge von Umstellungen von Qubit-Werten entlang ersten kürzesten Wegen zwischen einem Paar von beliebigen Positionen von Qubits, welche dem Quantengatter zugeordnet sind, und dann
- wenn das Quantengatter mehr als zwei zugeordnete Qubit-Positionen besitzt, Bestimmen einer Abfolge von Umstellungen von Qubit-Werten entlang zweiten kürzesten Wegen zwischen jeder der Positionen außer den bereits berücksichtigten, und den bereits bestimmten ersten kürzesten Wegen.

2. Verfahren nach Anspruch 1, wobei der Kostenpunkt einen Kostenpunkt berücksichtigt, welcher jedem Typ von einzusetzendem SWAP-Gatter zugewiesen ist.

3. Verfahren nach einem der vorhergehenden Ansprüche, wobei das Wiederherstellen der anfänglichen Anordnung gemäß einem Tokenaustausch-Algorithmus bewirkt wird.

4. Verfahren nach einem der vorhergehenden Ansprüche, wobei die Größe der Sequenz zwischen 3 und 5 beträgt.

5. Verfahren nach einem der vorhergehenden Ansprüche, wobei die kürzesten Wege bestimmt werden, indem die kürzesten Wege zwischen den Knoten des Graphen vorberechnet werden.

6. Verfahren nach dem vorhergehenden Anspruch, wobei die kürzesten Wege durch den Dijsktra-Agorithmus berechnet werden.

7. Computerprogramm, umfassend Anweisungen, welche, wenn sie von einem Prozessor eines Computersystems ausgeführt werden, das Ausführen eines Verfahrens nach einem der vorhergehenden Ansprüche auslösen.

8. Optimierungsplattform für eine Quantenschaltung, welche aus einer geordneten Reihe von Quantengattern aufgebaut ist, welche auf eine anfängliche Anordnung von Qubit-Werten angewendet wird, bestehend aus einem Einfügen eines Satzes lokaler SWAP-Gatter, so dass der Satz von Gattern der Quantenschaltung lokal wird, umfassend numerische Verarbeitungsmittel für ein:

- für jedes Quantengatter der Reihe, falls es nicht lokal ist, Einfügen eines Satzes von lokalen SWAP-Gattern vor dem Quantengatter,
- Bestimmen des Satzes von Permutationen, von welchen jede eine Abfolge von Umstellungen von Qubit-Werten entlang kürzesten Wegen zwischen den Positionen von Qubits bildet, welche dem Quantengatter zugeordnet sind, und
- Auswählen aus dem Satz von Permutationen, einer Permutation, welche einen Kostenpunkt minimiert, welcher die Zahl der notwendigen Umstellungen repräsentiert, um die Quantengatter einer Sequenz innerhalb der Reihe lokal zu machen, wobei die Größe der Sequenz wesentlich kleiner als diejenige der Reihe ist;
- Wiederherstellen der anfänglichen Anordnung, indem ein abdeckender Baum eines Graphen erzeugt wird, welcher die Anordnung der Qubits der Schaltung repräsentiert, und indem die Umstellungen von Qubit-Werten entlang der Wege des Baums ausgelöst werden,

wobei der Satz von Permutationen bestimmt wird durch:

- Bestimmen einer Abfolge von Umstellungen von Qubit-Werten entlang ersten kürzesten Wegen zwischen einem Paar von beliebigen Positionen von Qubits, welche dem Quantengatter zugeordnet sind, und dann

wenn das Quantengatter mehr als zwei zugeordnete Qubit-Positionen besitzt, Bestimmen einer Abfolge von Umstellungen von Qubit-Werten entlang zweiten kürzesten Wegen zwischen jeder der Positionen außer den bereits berücksichtigten, und den bereits bestimmten ersten kürzesten Wegen.

**Claims**

1. Method for optimising a quantum circuit composed of an ordered series of quantum gates applied to an initial layout of qubit values, consisting of inserting a set of local SWAP gates, so that all the gates of said quantum circuit are local, comprising steps, executed by a processor of a computer system, consisting of:

- inserting, for each quantum gate in said series, if said gate is not local, a set of local SWAP gates before said quantum gate,
- determining (S4) the set of permutations, each consisting of a succession of swaps of qubit values along the shortest paths between the positions of qubits associated with said quantum gate, and
- choosing (S5) from said set of permutations, a permutation that minimises a cost representing the number of swaps required to make the quantum gates of a sequence within said series local, the size of said sequence being substantially smaller than that of said series;
- restoring (S7) said initial layout by establishing a spanning tree of a graph representative of the layout of the qubits of said circuit, and by swapping qubit values along paths of said tree,

wherein the determination (S4) of the set of permutations is carried out by

- determining a succession of swaps of qubit values along the first shortest paths between any pair of positions of qubits associated with said quantum gate, then,
- if said quantum gate has more than two positions of associated qubits, determining a succession of swaps of qubit values along the second shortest paths between each of the positions other than those already considered, and the first shortest paths already determined.

2. Method according to claim 1, wherein said cost takes into account a cost attached to each type of SWAP gate to be inserted.

3. Method according to one of the preceding claims, wherein the initial layout is restored according to a token exchange algorithm.

4. Method according to one of the preceding claims, wherein the size of said sequence is between 3 and 5.

5. Method according to one of the preceding claims, wherein said shortest paths are determined by pre-computing the shortest paths between all the vertices of said graph.

6. Method according to the preceding claim, wherein said shortest paths are computed by Dijsktra's algorithm.

7. Computer program comprising instructions which, when executed by a processor of a computer system, result in the implementation of a method according to one of the preceding claims.

8. Platform for optimising a quantum circuit composed of an ordered series of quantum gates applied to an initial layout of qubit values, consisting of inserting a set of local SWAP gates, so that all the gates of said quantum circuit are local, comprising digital processing means for

- inserting, for each quantum gate in said series, if said gate is not local, a set of local SWAP gates before said quantum gate,
- determining the set of permutations, each consisting of a succession of swaps of qubit values along the shortest paths between the positions of qubits associated with said quantum gate, and

- choosing from said set of permutations, a permutation that minimises a cost representing the number of swaps required to make the quantum gates of a sequence within said series local, the size of said sequence being substantially smaller than that of said series;
- restoring said initial layout by establishing a spanning tree of a graph representative of the layout of the qubits of said circuit, and by swapping qubit values along paths of said tree,

wherein the set of permutations is determined by

- determining a succession of swaps of qubit values along the first shortest paths between any pair of positions of qubits associated with said quantum gate, then,
- if said quantum gate has more than two positions of associated qubits, determining a succession of swaps of qubit values along the second shortest paths between each of the positions other than those already considered, and the first shortest paths already determined.

Fig. 1

Fig. 2a

Fig. 2b

Fig. 2c

Fig. 4a

Fig. 4b

**Fig. 3**

**Fig. 6**

**Fig.5a**

**Fig.5b**

**Fig.5c**

**Fig.5d**

**Fig. 7a : f₀**

**Fig. 7b**

**Fig. 7c**

**Fig. 7d : f_t**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. W. SHOR.** Algorithm for quantum computation: discrete logarithms and factoring. *Foundations of Computer Science,* 1994, 124-134
- **YUICHI HIRATA.** An efficient method to couvert arbitrary quantum circuits to ones on a Linear Nearest Neighbor architecture. Institut de Sciences et de Technologies de Nara
- **YUICHI HIRATA et al.** AN EFFICIENT CONVERSION OF QUANTUM CIRCUITS TO A LINEAR NEAREST NEIGHBOR ARCHITECTURE. *QUANTUM INFORMATION AND COMPUTATION,* 01 Janvier 2011, vol. 11, 142-166
- **BHATTACHARJEE DEBYOTI ; CHATTOPADHYAY ANUPAM.** Depth-optimal Quantum Circuit Placement for Arbitrary Topologies. Nanyang Technological University, 2017
- **ROBERT WILLE ; AARON LYE ; ROLF DRECHSLER.** Optimal SWAP Gate Insertion for Nearest Neighbor Quantum Circuits. *Design Automation Conférence (ASP-DAC),* 2014
- **K. YAMANAKA ; E. D. DEMAINE ; T. ITO ; J. KAWAHARA ; M. KIYOMI ; Y. OKAMOTO ; T. SAITÔ ; A. SUZUKI ; K. UCHIZAWA ; T. UNO.** *Swapping Labeled Tokens on Graph*
- **K. YAMANAKA ; E. D. DEMAINE ; T. ITO ; J. KAWAHARA ; M. KIYOMI ; Y. OKAMOTO ; T. SAITÔ ; A. SUZUKI ; K. UCHIZAWA ; T. UNO.** Swapping Labeled Tokens on Graph. *Fun with Algorithme,* 2014, 364-375
- **KRUSKAL, J. B.** On the shortest spanning subtree of a graph and the traveling salesman problem. *Proceedings of the American Mathematical Society,* 1956, vol. 7, 48-50